# EUROPEAN PATENT APPLICATION

(11) **EP 1 930 372 A1**
(43) Date of publication of application: **11.06.2008**
(21) Application number: 06797027.7
(22) Date of filing: 30.08.2006
(51) Int. Cl.: C08L 23/26, C08K 3/22

(54) **FLAME-RETARDANT RESIN COMPOSITION**

(30) Priority: 30.08.2005 JP 2005250040
(71) Applicant: Du Pont-Mitsui Polychemicals Co., Ltd., Tokyo 105-7117 (JP)
(72) Inventor: MAEDA, Toshiyuki, Chiba 299-0124 (JP)
(74) Representative: Cresswell, Thomas Anthony
(86) International application number: PCT/JP2006/317052
(87) International publication number: WO 2007/026735

(57) **Abstract**

To provide a flame-retardant resin composition exhibiting high flame retardance, and excellent char (shell) formation, moldability and mechanical properties, stably without variation.

A flame-retardant resin composition comprising an olefin-type resin (A), a modified copolymer (B) obtained by modifying at least partially a copolymer comprising a C₄ olefin and an α,β-unsaturated dicarboxylic anhydride or a derivative thereof, by at least one method of the following (b-1) and (b-2), and an inorganic flame retardant (C):
(b-1); modification with a compound having a hydroxyl group and/or a compound having an ether group; and
(b-2); partial ionomerization with metal ions.

Preferred embodiment of the copolymer comprising a C₄ olefin and an α,β-unsaturated dicarboxylic anhydride or a derivative thereof is an alternating copolymer composed of the C₄ olefin and the α,β-unsaturated dicarboxylic anhydride or the derivative thereof

## Description

### TECHNICAL FIELD

The present invention relates to a flame-retardant resin composition. For more detail, the present invention relates to a flame-retardant resin composition having good char (shell) formation, excellent moldability and mechanical properties as well as high flame retardance.

### Background Art

An olefin-type resin is widely used as an electric insulating material, because of having generally excellent electric characteristics, mechanical properties, processability and the like. In particular, in applications such as electric wires, cables and the like, an ethylene-unsaturated ester random copolymer is widely used, because of having good balance of strength, low temperature characteristics, scratch resistance, hardness and the like.

Such an ethylene copolymer has a flammable property, therefore, requires to be subjected to flame retardance depending on applications, and has been subjected to compounding of a halogen-type flame retardant in the past. However, such a compound has a problem of toxic gas generation in combustion, therefore in recent years, a formulation compounded with a non-halogen-type metal hydroxide such as magnesium hydroxide, aluminum hydroxide or the like has been adopted. However, the metal hydroxide flame retardant is not capable of exerting sufficient flame-retardant effect unless rather high amount is compounded, which sometimes sacrificed processability, scratch resistance and other mechanical characteristics of the ethylene copolymer. In particular, in applications such as a thin-walled electric wire, a thin-walled construction sheet, a thin-walled vehicle sheet and the like, high flame retardance, good moldability and mechanical properties in a thin-walled state have been required, and the development of flame-retardant formulation of a metal hydroxide satisfying theses performances was not easy.

A flame-retardant resin composition based on an ethylene-unsaturated carboxylate ester copolymer represented by, for example, ethylene-ethyl acrylate copolymer, has advantage of being excellent in shell formation in combustion, however, flame retardance or toughness of a base polymer is low, and compounding of a large quantity of a flame retardant is difficult. That is, small compounding amount of the flame retardant can not exert a sufficient flame-retardant effect, while with increased compounding amount of the flame retardant deteriorates processability as well as lowers mechanical strength, therefore, adaptability thereof to the above applications was difficult.

An ethylene-vinyl acetate copolymer exhibits most excellent toughness among ethylene copolymers, and has filler loading property enabling high amount of compounding of a flame retardant, or flexibility, and is also a cheaper and more attractive material as compared with an ethylene-unsaturated carboxylate ester copolymer, however, a flame-retardant resin composition based on this has also an insufficient flame retardance, and in particular, has a serious defect of providing difficulty in shell formation and dripping in combustion, and also had difficulty in adaptability to the above applications.

In a compounding system of an inorganic hydroxide flame-retardant into the above olefin-type resin, many trials to compound various polymers or additives have been executed in order to improve properties. For example, to prevent alteration or degradation of chemical resistance of the surface of a molded product, a compounding example of a polymer compound modified with dicarboxylic acid or an anhydride thereof has been known (see Patent Document 1). In addition, to improve wear resistance, scratch resistance or flexural whitening resistance of a molded product, a method for compounding an ethylene copolymer, wherein maleic anhydride is random copolymerized or graft copolymerized, has also been known (see Patent Document 2). Among these, in the former document, improvement of oxygen index in some extent has been reported, however, these formulations were not those providing high flame retardance.

Accordingly, the present applicants have proposed a flame-retardant resin composition composed of an olefin-type resin, a fine particle alternating copolymer and an inorganic flame-retardant, which exhibited high flame retardance, and excellent char (shell) formation, moldability and mechanical properties (JP-A-2004-156026). The proposed flame-retardant resin composition exhibited excellent mechanical properties or flame retardance, however, it sometimes exhibited variation of mechanical properties or flame retardance.

Patent Document 1: JP-A-63-225641
Patent Document 2: JP-A-5-117452
Patent Document 3: JP-A-2004-156026

### DISCLOSURE OF THE INVENTION

### PROBLEMS TO BE SOLVED BY THE INVENTION

The present inventors have intensively studied a way to develop a flame-retardant resin composition, which is capable of solving variation of mechanical properties or flame retardance observed in the already proposed flame-retardant resin composition, and as a result, have completed the present invention.
That is, it is an object of the present invention to provide a flame-retardant resin composition exhibiting high flame retardance, and excellent char (shell) formation, moldability and mechanical properties, stably without variation.

### MEANS FOR SOLVING THE PROBLEMS

The present invention provides a flame-retardant resin composition comprising an olefin-type resin (A), a modified copolymer (B) obtained by modifying at least partially a copolymer comprising a C₄ olefin and an α,β-unsaturated dicarboxylic anhydride or a derivative thereof by at least one method of the following (b-1) and (b-2), and an inorganic flame retardant (C):
(b-1); modification with a compound having a hydroxyl group and/or a compound having an ether group; and
(b-2); partial ionomerization with metal ions.

The above flame-retardant resin composition, wherein the C₄ olefin in the modified copolymer (B) is isobutylene, is a preferable embodiment of the present invention.

The above flame-retardant resin composition, wherein the α,β-unsaturated dicarboxylic anhydride or the derivative thereof in the modified copolymer (B) is maleic anhydride or a derivative thereof, is also a preferable embodiment of the present invention.
The above flame-retardant resin composition, wherein the olefin-type resin (A) is an ethylene copolymer selected from an ethylene-unsaturated ester copolymer and/or an ethylene-unsaturated carboxylic acid copolymer, is also a preferable embodiment of the present invention.

### ADVANTAGES OF THE INVENTION

According to the present invention, there is provided a flame-retardant resin composition exhibiting high flame retardance, and excellent char (shell) formation, moldability and mechanical properties, stably without variation.
According to the present invention, a flame-retardant resin composition is provided, which can be used by fabricating to various molded products by various molding methods.
A flame-retardant resin composition provided by the present invention is a flame-retardant resin composition that can be subjected to cross-linking by an organic peroxide or radiation ray.

### BEST MODE FOR CARRYING OUT THE INVENTION

According to the present invention, there is provided a flame-retardant resin composition comprising an olefin-type resin (A), a modified copolymer (B) obtained by modifying at least partially a copolymer composed of a C₄ olefin and an α,β-unsaturated dicarboxylic anhydride or a derivative thereof, by at least one method of the following (b-1) and (b-2), and an inorganic flame retardant (C):
(b-1); modification with a compound having a hydroxyl group and/or a compound having an ether group; and
(b-2); partial ionomerization with metal ions.

As the olefin-type resin (A) used in the present invention, a homopolymer of olefin, a copolymer of olefins themselves, a copolymer of an olefin and a polar monomer, or a mixture thereof is included.

As an example of the homopolymer of olefin and the copolymer of olefins themselves, there are included a homopolymer of ethylene, or a polyethylene that is a copolymer of ethylene and a C3 or higher α-olefin, for example, high-pressure-processed polyethylene, medium-high density polyethylene, linear low density polyethylene, ultralow density linear polyethylene or the like, polypropylene, poly(1-butene), poly(4-methyl-1-pentene), polyolefin elastomer, a cyclic olefin polymer or the like, which are produced by various methods by using various catalyst types, for example, a radical polymerization catalyst, a multi-site catalyst composed of a highly active titanium catalytic component and an organic aluminum compound catalytic component, a single-site catalyst composed of a metallocene catalytic component represented by a zirconium compound and an aluminoxane catalytic component and the like.

As the copolymer of an olefin and a polar monomer, a copolymer of ethylene and one kind or two or more kinds of polar monomers selected from an unsaturated ester, an unsaturated carboxylic acid and a salt thereof, carbon monoxide, a vinyl silane compound and the like is included.
As an unsaturated ester, a vinyl ester such as vinyl acetate, vinyl propionate, an unsaturated carboxylic acid ester such as methyl acrylate, ethyl acrylate, isobutyl acrylate, n-butyl acrylate, methyl methacrylate, glycidyl methacrylate, dimethyl maleate, or the like is included. As an unsaturated carboxylic acid, acrylic acid, methacrylic acid, mono-ethyl maleate, maleic anhydride or the like is included. As a salt of an unsaturated carboxylic acid, a Na salt, a Li salt, a K salt, a Zn salt, a Mg salt, or a Ca salt of these unsaturated carboxylic acids or the like is included.
These copolymers can be obtained by, for example, radical copolymerization at high temperature, under high pressure, or solution polymerization, emulsion polymerization or the like.

As the olefin-type resin, homopolymer of the above olefin, copolymer of olefins themselves, copolymer of an olefin and a polar monomer, wherein an unsaturated carboxylic acid and an anhydride thereof, a vinyl silane compound or the like are graft polymerized, may be used also.

Among these olefin-type resins, those selected from polyethylene and the copolymer of ethylene and a polar monomer, are preferable. In particular, an ethylene-unsaturated ester copolymer, selected from an ethylene-vinyl acetate copolymer and an ethylene-unsaturated carboxylate ester copolymer, or an ethylene-unsaturated carboxylic acid copolymer, is preferable. Still more, it is also preferable to use a mixture, which is composed of these preferable copolymers as a main component, and polyethylene or the other copolymer of ethylene and a polar monomer as a sub-component. A particularly suitable one is an ethylene-unsaturated ester copolymer or a mixture including this as a main component, because it is capable of significantly exerting the addition effect of the modified alternating copolymer (B).

The above suitable polyethylene is one having a density of from 870 to 970 kg/m³, preferably from 890 to 960 kg/m³, and more preferably from 900 to 950 kg/m³, and the suitable copolymer of ethylene and a polar monomer is one having a density of equal to or higher than 920 kg/m³, and preferably from 930 to 970 kg/m³.

In addition, the suitable ethylene-unsaturated ester copolymer is one having an unsaturated ester content of from 1 to 80% by weight, preferably from 5 to 47% by weight, more preferably from 15 to 47% by weight, and still more preferably from 24 to 47% by weight, in addition, the suitable ethylene-unsaturated carboxylic acid copolymer is one having an unsaturated carboxylic acid content of from 0.5 to 40% by weight, and preferably from 1 to 25% by weight.

As the above polyethylene or the copolymer of ethylene and a polar monomer, in consideration of processability, mechanical strength, flame retardance or the like, it is preferable to use one having a melt flow rate (MFR) in an extent of from 0.01 to 100 g/10 minutes, preferably from 0.01 to 70 g/10 minutes, more preferably from 0.01 to 15 g/10 minutes, and still more preferably from 0.01 to 3 g/10 minutes, at a temperature of 190°C and a load of 2160 g.

The modified copolymer (B) of the present invention is a modified copolymer, obtained by modifying at least partially a copolymer comprising a C₄ olefin and an α,β-unsaturated dicarboxylic anhydride or a derivative thereof, by at least one method of the following (b-1) and (b-2):
(b-1); modification with a compound having a hydroxyl group and/or a compound having an ether group; and
(b-2); partial ionomerization with metal ions.

In the present invention, a copolymer composed of a C₄ olefin (before modification) and an α,β-unsaturated dicarboxylic anhydride or a derivative thereof to be subjected to modification by (b-1) and/or (b-2) may be a random copolymer, however, it is particularly preferable to be an alternating copolymer of a C₄ olefin and an α,β-unsaturated dicarboxylic anhydride or a derivative thereof.

As the C₄ olefin in the copolymer (B), 1-buten, isobutylene, or the like is included, and isobutylene is preferable.
As an α,β-unsaturated dicarboxylic anhydride, maleic anhydride, citraconic anhydride, ethylmaleic anhydride or the like can be exemplified, and it is preferable, in particular, to use maleic anhydride. In addition, as the derivative of α, β-unsaturated dicarboxylic anhydride, dicarboxylic acid, a metal salt, an annmonium salt, an amine salt, a half ester, a diester, a monoamide, a diamide, an imide thereof or the like is included, in particular, maleimide anhydride is a suitable derivative. In the case where the alternating copolymer has a derivative unit of these α,β-unsaturated dicarboxylic anhydride, some of or all of the unit of the α,β-unsaturated dicarboxylic anhydride may be the derivative unit, and two or more kinds of the derivative units may be included.

As the copolymer composed of a C₄ olefin before modification and an α,β-unsaturated dicarboxylic anhydride or a derivative thereof to be subjected to modification by (b-1) and/or (b-2), in the modified copolymer (B), an alternating copolymer of isobutylene and maleic anhydride is a suitable example thereof. This alternating copolymer has the following structural formula.

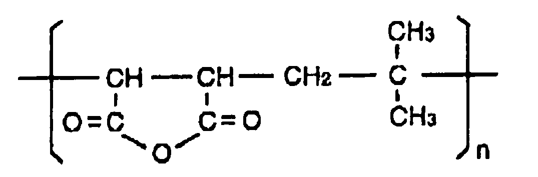

This alternating copolymer of isobutylene and maleic anhydride can be obtained by copolymerization of isobutylene and maleic anhydride in the presence of a radical polymerization catalyst. In addition, an alternating copolymer having a derivative unit of maleic acid can be obtained by reacting some of or all of the maleic anhydride units of this alternating copolymer with an alkali metal hydroxide, ammonia, an amine, an alcohol or the like.

In the modified copolymer (B) of the present invention, at least some part of the copolymer (particularly preferably an alternating copolymer), composed of a C₄ olefin and an α, β-unsaturated dicarboxylic anhydride or a derivative thereof, is modified by at least one method of the above (b-1) and (b-2).

A method for modification of the copolymer composed of a C₄ olefin and an α,β-unsaturated dicarboxylic anhydride or a derivative thereof, by at least one method of the above (b-1) and (b-2), is not especially limited, and can be executed by selecting a method and condition enabling modification, as appropriate, however, specifically the following method is included.

As a specific method for modification by a method of (b-1) in the present invention, there can be exemplified a method for compounding (blending) a compound having a hydroxyl group and/or a compound having an ether group into the copolymer, (particularly preferably an alternating copolymer), composed of a C₄ olefin and an α, β-unsaturated dicarboxylic anhydride or a derivative thereof, or a method for reacting the copolymer, (particularly preferably an alternating copolymer), composed of a C₄ olefin and an α,β-unsaturated dicarboxylic anhydride or a derivative thereof, with a compound having a hydroxyl group and/or a compound having an ether group.

As a preferable example of the compound having a hydroxyl group used in modification of (b-1), alcohols are included. A mono-valence or multi-valence aliphatic alcohol is particularly preferable. Among alcohols, in view of foaming in molding, higher alcohols, for example, C₄ to C₂₅ alcohols, in particular C₄ to C₂₅ aliphatic alcohols are preferable.

As the compound having an ether group used in modification of (b-2), a polyether is preferable.

In addition, a compound used in modification of (b-2) may be a compound containing a hydroxyl group and an ether group. As such a compound, a polyoxyalkylene glycol mono-ether is included. The polyoxyalkylene glycol mono-ether is a compound represented by a formula RO(AO)ₙH (wherein R represents a C₁ to C₁₀ alkyl group, A represents a C₂ to C₄ alkylene group which may be substituted with a phenyl group, and n represents a number of about 1 to 100). As the polyoxyalkylene glycol mono-ether, those described in Patent No. 2882648 can be exemplified. It should be noted that compounding amount (blending amount) of a compound used in modification of (b-1) is preferably in a range of from 25 to 75 parts by weight per 100 parts by weight of the copolymer composed of a C₄ olefin and an α,β-unsaturated dicarboxylic anhydride or a derivative thereof,.

As condition to modify the modified copolymer (B) in the present invention by polyoxyalkylene glycol mono-ether, the condition in an esterification reaction of a copolymer of isobutylene and maleic anhydride with the polyoxyalkylene glycol mono-ether, described in Patent No. 2882648, can be used as a reference.
In addition, as the modified copolymer (B) in the present invention, a polymer obtained by esterification of the copolymer of isobutylene and maleic anhydride with the polyoxyalkylene glycol mono-ether, described in the same patent, may be used.

Referring to partial ionomerization by metal ions, which is a modification by (b-2), a monovalence metal such as Na, K, Li, or a bivalence metal such as Zn, Mg, Ca is included.

In preparation of a flame-retardant resin composition of the present invention, in consideration of compounding cost, it is preferable to use the modified copolymer (preferably a modified alternating copolymer) (B) in a powder state. In this case, to enhance dispersion into the olefin-type resin (A), and to attain better fundamental properties such as tensile characteristics or impact resistance of a composition, or appearance, as the modified copolymer (B), one having an average particle diameter of equal to or smaller than 50 µm, and preferably equal to or smaller than 40 µm is used. In addition, the surface of such a copolymer may be coated with a higher fatty acid such as stearic acid or oleic acid, in a range not to impair performance. In addition, as the copolymer (preferably the modified alternating copolymer) (B), one having a weight average molecular weight of from about 1,000 to 500,000, and in particular, from about 50,000 to 400,000 is suitably used.

As the inorganic flame retardant (C) used in the present invention, there can be exemplified a metal hydroxide such as magnesium hydroxide, aluminum hydroxide, basic magnesium carbonate, hydrotalcite; a filler and a reinforcing material such as a metal silicate, a metal borate, silica, alumina, calcium carbonate, zinc carbonate, talc, clay, zeolite, a glass fiber. In the case where sufficient flame retardance is required, it is preferable to use magnesium hydroxide or aluminum hydroxide, or a mixed inorganic flame retardant that magnesium hydroxide or aluminum hydroxide occupies at least equal to or more than 50% by weight.

In consideration of miscibility of the inorganic flame retardant (C), appearance of a molded product obtained from the flame-retardant resin composition, or the like, as the inorganic flame retardant, it is desirable to use one having an average particle diameter of from about 0.05 to 20 µm, in particular, from about 0.1 to 5µm. In addition, by the same reason, it is preferable to use the inorganic flame retardant whose surface is treated with a fatty acid, a fatty acid amide, a fatty acid salt, a fatty acid ester, an aliphatic alcohol, a silane coupling agent, a titanium coupling agent, silicone oil, a silicone polymer, a phosphate ester or the like.

Compounding ratio of the olefin-type resin (A) and the modified copolymer (preferably the modified alternating copolymer) (B) is from 50 to 0.5 parts by weight, preferably from 20 to 1 parts by weight, and more preferably from 10 to 1 parts by weight of (B), per from 50 to 99.5 parts by weight, preferably from 80 to 99 parts by weight and more preferably from 90 to 99 parts by weight of (A), when the total amount of both components is 100 parts by weight. That is, compounding of the modified copolymer (preferably the modified alternating copolymer) (B) within the above range provides improvement of flame retardance and char (shell) formation, and also improvement of mechanical characteristics or processability in some cases.

In addition, compounding ratio of the inorganic flame retardant (C) is, although different by kind thereof, in consideration of flame retardance, processability, mechanical characteristics or the like, from 25 to 300 parts by weight, preferably from 80 to 300 parts by weight, and more preferably from 10 to 280 parts by weight per 100 parts by weight of the total amount of the olefin-type resin (A) and the modified copolymer (B).

The modified copolymer (B) used in the present invention has good compatibility with other components, in particular, the olefin-type resin (A), and exhibits no generation of secondary aggregation or the like in a flame-retardant resin composition using the modified copolymer (B), as a result, it makes possible to provide a flame-retardant resin composition exhibiting high flame retardance, and excellent char (shell) formation, moldability and mechanical properties, stably without variation.

Into the flame-retardant resin composition of the present invention, other polymers may be mixed within a range not to impair processability, properties and flame retardance thereof, preferably in a ratio of up to 100 parts by weight per 100 parts by weight of the total amount of the olefin-type resin (A) and the modified copolymer (B). As the other polymers that may be mixed, there are included styrene-type elastomer such as SEBS, SEPS, an olefin-type elastomer such as EBR, EPR, EPDM, ethylene-acrylic rubber, or an acid modified material thereof modified by maleic anhydride or the like, a plastic material derived from a plant (a cellulose-type, a starch-type, a lactic acid-type, a succinic acid-type, a butyric acid-type, a glycol-type) and the like.

In addition, into the flame-retardant resin composition of the present invention, various additives may be compounded, if necessary, within a range not to impair objectives of the present invention. As examples of such additives, there are exemplified an antioxidant; a light stabilizer; an ultraviolet absorbing agent; a flame retardant auxiliary such as zinc borate, aluminum stearate; a pigment such as carbon black; a dye; a lubricant such as silicone oil, an aliphatic compound, resin wax; an anti-blocking agent; a foaming agent; a foaming auxiliary; a cross-linking agent; a cross-linking auxiliary and the like.

To prepare the flame-retardant resin composition of the present invention, the olefin-type resin (A), the modified copolymer (B), the inorganic flame retardant (C), and, if necessary, other additives to be compounded, may be kneaded by using a usual kneader such as a single-screw extruder, a twin-screw extruder, a Banbury mixer, a pressurized kneader, a roll, at a temperature of equal to or higher than melting point of the olefin-type resin (A), and of equal to or lower than decomposition temperature of (A) and (B). In addition, in the case where an organic peroxide is compounded, the kneading may be executed at a temperature of equal to or lower than its melting point. Such blending may be executed in one-stage or in stepwise. In addition, as described already, as the modified copolymer (B), one having an average particle diameter of equal to or smaller than 50 µm, and preferably equal to or smaller than 40 µm is used, to obtain excellent dispersion in the resin composition, and excellent flame retardance and practical properties (for example, tensile characteristics, impact resistance, appearance and the like of the composition) in the flame-retardant resin composition obtained. In addition, the modified copolymer (B) can be blended, by using as an aqueous solution in the case of an alkali metal salt, an ammonium salt, an amine salt or the like, and immersing the olefin-type resin (A) and/or the inorganic flame retardant (C), in advance, into this aqueous solution, so as to impregnate or adhere to the olefin-type resin (A) and/or the inorganic flame retardant (C). In this case, the copolymer (B) is envisaged to be impregnated or adhered, as a very fine particle, to the olefin-type resin (A) and/or the inorganic flame retardant (C). In addition, to enhance various properties such as heat resistance or strength, it may be subjected to cross-linking by using radiation ray or an organic peroxide or the like.

As a specific example of a molded product, as an application of the flame-retardant resin composition of the present invention, there are examples used in a field, for example, a toy; a civil engineering field such as an artificial lawn, a mat, a waterproof sheet, a tunnel sheet, a roofing; a pipe application such as a hose, a tube; an electric appliance such as packing, a vibration damping sheet; a backing material such as a carpet; an automotive application such as waterproof sheet for a door panel, a mud guard, a molding; a construction application such as a wall paper, furniture, a floor material, a foamed sheet; a cable application such as a wiring cable, a communication cable, an instrument cable, a power source code, a plug, a fire-resistant cable, a control and instrumentation cable, a shrink cable; adhesives application such as a pressure sensitive adhesive tape.

### EXAMPLES

Explanation will be given in more detail on the present invention with reference to Examples, however, the present invention should not be limited to these Examples.
It should be noted that raw materials used in Examples and Comparative Example are as follows:

### (1) A resin

(I) EVA (a): an ethylene-vinyl acetate copolymer (content of vinyl acetate is 28% by weight, MFR is 1.0 g/10 minutes)
(II) A modified alternating copolymer MB-1: Pellets which was obtained by melt blending (a)ionomerization product obtained by blending an isobutylene-maleic anhydride alternating copolymer and 1-octadecanol, and further by ionomerization with calcium, and (b)the above (I) EVA (a) in a weight ratio of 50/50 at 160°C, followed by pelletizing (product name: 050622A, manufactured by Lucite Japan Vo., Ltd.)
(III) A modified alternating copolymer, MB-2: Pellets which was obtained by melt blending (a)composition obtained by blending an isobutylene-maleic anhydride alternating copolymer and 1-octadecanol, and (b)the above (I) EVA (a) in a weight ratio of 50/50 at 160°C, followed by pelletizing (product name: 050622D, manufactured by Lucite Japan Vo., Ltd.)

### (2) An inorganic flame retardant

(IV) Magnesium hydroxide - 1: commercial name: Kisuma 5L, manufactured by Kyowa Chem. Ind. Co., Ltd.
(V) Magnesium hydroxide - 2: commercial name: Kisuma 5A, manufactured by Kyowa Chem. Ind. Co., Ltd.

### (3) An antioxidant

(VI) A hindered phenol-type antioxidant: commercial name: Irganox 1010, manufactured by Ciba Specialty Chemicals Co., Ltd.

### Examples 1 to 3

Each of raw materials was subjected to dry blending in a ratio (parts by weight) shown in Table 1, and then melt blending by using a pressurized kneader and a roll (kneading condition was at 160°C for 30 minutes). Then, from the resulting composition, press sheets with predetermined thickness were prepared by using a press forming machine (temperature condition was at 160°C for 10 minutes), to execute the following flame-retardant test, variation test of flame retardance, and evaluation of strand appearance. The results are shown in Table 1.

It should be noted that methods for property evaluation are as follows:

### (1) A flame-retardant test

UL 94 flame-resistant test: On the press sheets with a thickness of 0.5 mm, flame retardance was evaluated by a UL 94 vertical test, by using a UL 94 combustion tester (manufactured by Suga Test Instruments Co., Ltd.).

### (2) A variation test of flame retardance

On the arbitrary 20 test pieces, the combustion test was executed by the above method, and the number not attainable in any of the following required performances was measured:
Required performances:
1) Flaming after flame contacting is equal to or shorter than 10 seconds in any of the test pieces.
2) There is no flaming or glowing up to a clamp position.
3) There is no flaming particle drop that ignites cotton with a size of equal to or smaller than 305 mm.
4) Glowing after removing the second time flame is within 30 seconds.

### (3) Strand appearance

Strand appearance was visually observed in measurement of MFR (condition: a temperature of 190°C, and a load of 10 kg) in accordance with the JIS K7210 method.
The appearance was evaluated by the following judgment criteria:
○: good strand skin
×: rough strand skin

### Comparative Example 1

From a composition obtained in the same manner as in Example 1, except that 100 parts by weight of EVA was used and use of the modified alternating copolymer was omitted, press sheets were prepared to execute the flame-retardant test, variation test of flame retardance and evaluation of strand appearance. The results are shown in Table 1.

**Table 1**

| | Example 1 | Example 2 | Example 3 | Comp. Exp. 1 |
|---|---|---|---|---|
| EVA (a) | 90 | 90 | 90 | 100 |
| MAC MB-1 | 10 | | 10 | |
| MAC MB-2 | | 10 | | |
| Mg(OH)₂-1 | 200 | 200 | | 200 |
| Mg(OH)₂-2 | | | 200 | |
| AOX | 0.2 | 0.2 | 0.2 | 0.2 |
| UL94/0.5 mm Thickness | V-0 | V-0 | V-0 | V-2 out |
| Flame retardance variation | 0 | 0 | 0 | 14 |
| Strand appearance | ○ | ○ | ○ | ○ to × |

| | | | | |
|---|---|---|---|---|
| (Note) MAC: Modified alternating copolymer Mg(OH)₂: Magnesium hydroxide AOX: Antioxidant | | | | |

### Industrial Applicability

A flame-retardant resin composition provided by the present invention is a flame-retardant resin composition excellent in processability, mechanical strength and char formation in combustion, and exhibiting high flame retardance stably without variation.
A flame-retardant resin composition provided by the present invention is capable of providing a flame-retardant resin composition attainable of V-0 level, in particular, even under severe condition of a thickness of 0.5 mm in a UL flame-retardant test standard. Such a flame-retardant resin composition is one usable by being fabricated into various molded products by various molding methods.
A flame-retardant resin composition provided by the present invention can be used by lamination with various other materials. Specifically, it can be effectively utilized in applications, where high flame retardance is required, for example, a thin-walled electric wire, a thin-walled sheet for construction, a thin-walled sheet for a vehicle, a toy, a hose, a sheet, a tape, a wall paper, other electric wire coating material, other construction material and the like.
A flame-retardant resin composition provided by the present invention can be cross-linked by compounding a cross-linking agent such as an organic peroxide, and by maintaining at a temperature equal to or higher than decomposition temperature of the organic peroxide, in molding or after molding. In addition, heat resistance of the molded product can be enhanced by cross-linking with radiation ray in molding or after molding.

## Claims

1. A flame-retardant resin composition comprising an olefin-type resin (A), a modified copolymer (B) obtained by modifying at least partially a copolymer comprising a C₄ olefin and an α,β-unsaturated dicarboxylic anhydride or a derivative thereof, by at least one method of the following (b-1) and (b-2), and an inorganic flame retardant (C):
(b-1); modification with a compound having a hydroxyl group and/or a compound having an ether group; and
(b-2); partial ionomerization with metal ions.

2. The flame-retardant resin composition according to claim 1, wherein the copolymer comprising the C₄ olefin and the α, β-unsaturated dicarboxylic anhydride or the derivative thereof is an alternating copolymer composed of the C₄ olefin and the α,β-unsaturated dicarboxylic anhydride or the derivative thereof

3. The flame-retardant resin composition according to claim 1 or 2, wherein the C₄ olefin in the modified copolymer (B) is isobutylene.

4. The flame-retardant resin composition according to any one of claims 1 to 3, wherein the α, β-unsaturated dicarboxylic anhydride or the derivative thereof in the modified copolymer (B) is maleic anhydride or a derivative thereof.

5. The flame-retardant resin composition according to any one of claims 1 to 4, wherein the olefin-type resin (A) is an ethylene copolymer selected from an ethylene-unsaturated ester copolymer and/or an ethylene-unsaturated carboxylic acid copolymer.

6. The flame-retardant resin composition according to any one of claims 1 to 5, wherein the inorganic flame retardant (C) is a metal hydroxide.

7. The flame-retardant resin composition according to any one of claims 1 to 6, wherein the modified copolymer (B) is compounded in a ratio of from 50 to 0.5 parts by weight per from 50 to 99.5 parts by weight of the olefin-type resin (A).

8. The flame-retardant resin composition according to any one of claims 1 to 7, wherein the inorganic flame retardant (C) is compounded in a ratio of from 25 to 300 parts by weight per 100 parts by weight in total of the olefin-type resin (A) and the modified copolymer (B).
